(19) Europäisches Patentamt / European Patent Office / Office européen des brevets

(11) **EP 4 539 334 A1**

(12) **EUROPEAN PATENT APPLICATION**

(43) Date of publication:
16.04.2025 Bulletin 2025/16

(21) Application number: 24203839.6

(22) Date of filing: 01.10.2024

(51) International Patent Classification (IPC):
*H02P 21/16* (2016.01)

(52) Cooperative Patent Classification (CPC):
H02P 21/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.10.2023 JP 2023176645

(71) Applicant: Nikki Co., Ltd.
Atsugi, Kanagawa 243-0801 (JP)

(72) Inventors:
• TAKAHASHI, Hideo
  Atsugi-shi, 243-0801 (JP)
• OGURO, Ryuichi
  Atsugi-shi, 243-0801 (JP)

(74) Representative: Boult Wade Tennant LLP
Salisbury Square House
8 Salisbury Square
London EC4Y 8AP (GB)

(54) **CONTROL DEVICE FOR SYNCHRONOUS MOTOR**

(57)     A synchronous motor control device is enabled to perform automatic and highly accurate gain adjustment in current feedback control by accurately estimating a winding inductance.

A control device (1A) includes: an inverter (14); a current converting means (11) that converts a three-phase current of a synchronous motor (2) into a d-axis current and a q-axis current; a current feedback control calculating means (12) that calculates a d-axis voltage command value and a q-axis voltage command value from the d-axis current and the q-axis current; and a voltage command value converting means (13) that converts the d-axis voltage command value and the q-axis voltage command value into a three-phase voltage command value. In the control device (1A) that sends an output to the synchronous motor (2) on the basis of the three-phase voltage command value, a winding inductance to be used in current feedback control is calculated to perform gain adjustment in the current feedback control by calculating, as measurement parameters, a three-phase current, a three-phase voltage, and a rotation speed of the synchronous motor (2), the synchronous motor (2) in a constant rotation state being set as a measurement target.

FIG.1

$i_U$ :U-PHASE CURRENT [A]   $v_U$ :U-PHASE VOLTAGE [V]   $N_r$ :MOTOR ROTATION SPEED [rpm]
$i_V$ :V-PHASE CURRENT [A]   $v_V$ :V-PHASE VOLTAGE [V]
$i_W$ :W-PHASE CURRENT [A]   $v_W$ :W-PHASE VOLTAGE [V]

EP 4 539 334 A1

**Description**

Technical Field

The present invention relates to a synchronous motor control device, and more particularly, to a synchronous motor control device that has a function of automatically estimating a winding inductance as a parameter necessary for current feedback control of a synchronous motor.

Background Art

A synchronous motor is an electric motor that rotates at a synchronous speed determined by the frequency of an AC power supply, and performs a rotating operation following a rotating magnetic field formed by an input AC current while the rotor is attracted by the magnetic field. Normally, a synchronous motor is driven and controlled by a control system formed with a control device connected to the synchronous motor.

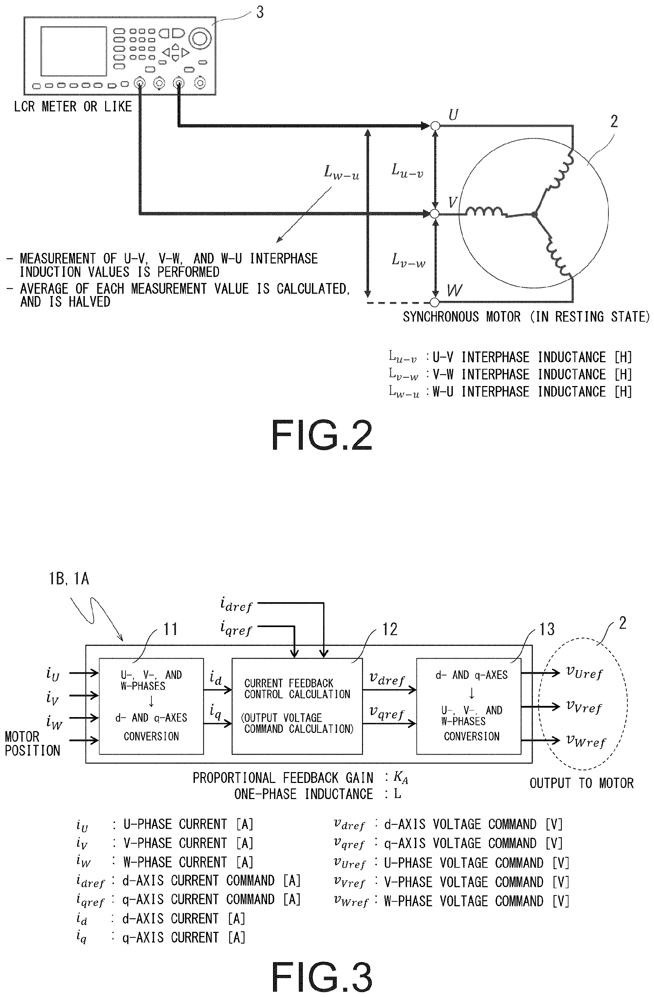

FIG. 3 is a functional block diagram illustrating such a control system for a synchronous motor 2. In this system, in a control device 1B that performs the drive control of the synchronous motor 2, a three-phase current ($i_U$, $i_V$, $i_W$) of the synchronous motor detected or estimated from a current sensor are used, or is represented by axes synchronized at an estimated motor position, so that the three-phase current is converted into a d-axis current ($i_d$) and a q-axis current ($i_q$) by a current converting means 11.

A current feedback control calculating means 12 calculates a d-axis voltage command value ($V_{dref}$) and a q-axis voltage command value ($V_{qref}$) by current feedback control so that the d-axis current ($i_d$) and the q-axis current ($i_q$) match the input d-axis current command value ($i_{dref}$) and q-axis current command value ($i_{qref}$), respectively. A voltage command value converting means 13 converts this voltage into a three-phase voltage command value ($V_{Uref}$, $V_{Vref}$, $V_{Wref}$) of the synchronous motor, and switching on and off of switching elements of an inverter are controlled, so that the three-phase voltage command value is output to the synchronous motor 2.

A common method for measuring a winding inductance that is a parameter necessary for current feedback control in such a conventional control system for the synchronous motor 2 is now described with reference to FIG. 2. By this method, a winding inductance value in a resting state is measured with an LCR meter 3 or the like, a U-V interphase, a V-W interphase, and a W-U interphase in the synchronous motor 2 are measured, an average of each measured value is obtained, and the value obtained by halving the average is set as the winding inductance of one phase of the motor.

Further, the current feedback control in the control system described above is expressed by the mathematical expressions shown below, and a proportional feedback gain is determined by the value of the winding inductance as shown below.

[Math. 1]

$$v_d = LK_A(i_{dref} - i_q)$$

$$v_q = LK_A(i_{qref} - i_q)$$

$v_d$ : d-AXIS VOLTAGE [V]      $L$   : MOTOR ONE-PHASE INDUCTANCE VALUE [H]
$v_q$ : q-AXIS VOLTAGE [V]      $K_A$  : PROPORTIONAL FEEDBACK GAIN
$i_d$ : d-AXIS CURRENT [A]      $i_{dref}$ : d-AXIS CURRENT COMMAND [A]
$i_q$ : q-AXIS CURRENT [A]      $i_{qref}$ : q-AXIS CURRENT COMMAND [A]

By the method for measuring the winding inductance with the LCR meter 3 or the like, however, measurement is performed while the synchronous motor 2 is in a resting state. Therefore, the winding inductance value depending on current characteristics is not accurately measured, and an error tends to be large. Therefore, it is difficult to perform accurate control in the current feedback control described above. Further, it is also necessary to perform parameter measurement and an adjustment operation each time the specification of the synchronous motor 2 to be controlled is changed.

On the other hand, claim 16 of WO 2009/144957 (Patent Literature 1) proposes a method for calculating a winding inductance value of a pair of adjacent stators from a current change rate of the three-phase alternating current applied from a three-phase inverter corresponding to each stator winding. Further, claim 8 of WO 2011/024935 (Patent Literature 2) proposes a method by which a storage unit that stores a map indicating a relationship between d-axis and q-axis currents and a winding inductance value, and calculating the winding inductance value from a current command value calculated by a current command value calculating unit and the map in the storage unit.

However, even by the methods proposed in Patent Literatures 1 and 2 described above, the control device connected to the synchronous motor cannot accurately measure the winding inductance value in the synchronous motor being driven. Therefore, it has to be said that it is difficult for the control device to automatically perform the current feedback control with high accuracy in cases including a case where the specification of the synchronous motor is changed.

Citation List

Patent Literature

 Patent Literature 1: WO 2009/144957 A
 Patent Literature 2: WO 2011/024935 A

Summary of Invention

Technical Problem

The present invention is to solve such problems as described above, and aims to enable a synchronous motor control device to accurately estimate a winding inductance of a synchronous motor, and automatically perform gain adjustment in current feedback control with high accuracy.

Solution to Problem

Therefore, the present invention provides a synchronous motor control device that includes: an inverter including a plurality of switching elements; a current converting means configured to convert a detected or estimated three-phase current of a synchronous motor into a d-axis current and a q-axis current; a current feedback control calculating means configured to calculate a d-axis voltage command value and a q-axis voltage command value from the d-axis current and the q-axis current, using current feedback control; and a voltage command value converting means configured to convert the d-axis voltage command value and the q-axis voltage command value into a three-phase voltage command value, and sends an output to the synchronous motor while controlling switching on and off of the switching elements on the basis of the three-phase voltage command value, the synchronous motor control device being characterized in that gain adjustment in the current feedback control is automatically performed while a winding inductance to be used in the current feedback control is estimated through calculation of a three-phase current, a three-phase voltage, and a rotation speed of the synchronous motor as measurement parameters, the winding inductance being obtained by setting the synchronous motor in a constant rotating state as a measurement target.

As described above, a method for automatically performing gain adjustment in current feedback control while estimating a winding inductance by calculating a three-phase current, a three-phase voltage, and a motor rotation speed as measurement parameters, with a synchronous motor in a constant rotating state being set as a measurement target, is adopted, to enable the connected control device to estimate the winding inductance of the operating synchronous motor online, and automatically perform gain adjustment in the current feedback control with high accuracy.

In the present invention, in a case where the three-phase current is converted into a d-axis current and a q-axis current in an orthogonal coordinate expression, the three-phase voltage is converted into a d-axis voltage and a q-axis voltage in an orthogonal coordinate expression, and the rotation speed of the synchronous motor is converted into a mechanical angular velocity, each of which is to be used in the above-described calculation, it is possible to easily and accurately estimate the winding inductance in the control device.

In the present invention, the winding inductance is expressed by a mathematical expression (5) formed by modifying a mathematical expression (4) obtained by substituting a mathematical expression (2) into mathematical expression (3), mathematical expressions (1) to (6) being used:

[Math. 2]

$$\omega_r = \frac{2\pi}{60} N_r \qquad \cdots (1)$$

$$\begin{bmatrix} v_d \\ v_q \end{bmatrix} = \begin{bmatrix} R & -L\frac{P}{2}\omega_r \\ L\frac{P}{2}\omega_r & R \end{bmatrix} \begin{bmatrix} i_d \\ i_q \end{bmatrix} + L\frac{d}{dt}\begin{bmatrix} i_d \\ i_q \end{bmatrix} + \begin{bmatrix} 0 \\ 1 \end{bmatrix}\frac{P}{2}\Phi_m\omega_r \qquad \cdots (2)$$

$$v_d i_q - v_q i_d \qquad \cdots (3)$$

$$v_d i_q - v_q i_d = \frac{1}{2}L\omega_r i_d^2 + \frac{1}{2}L\omega_r i_q^2 + \frac{1}{2}\Phi_m\omega_r i_d \qquad \cdots (4)$$

$$L = \frac{1}{i_q^2 + i_d^2}\left\{ \frac{2}{\omega_r}\left( v_d i_q - v_q i_d \right) - \Phi_m i_d \right\} \qquad \cdots (5)$$

$$v_q = \frac{P}{2}\Phi_m\omega_r \qquad \cdots (6)$$

| | | | |
|---|---|---|---|
| $i_d$ : | d-AXIS CURRENT [A] | $R$ : | MOTOR ONE-PHASE RESISTANCE VALUE [Ω] |
| $i_q$ : | q-AXIS CURRENT [A] | $L$ : | MOTOR ONE-PHASE INDUCTANCE VALUE [H] |
| $v_d$ : | d-AXIS VOLTAGE [V] | $\Phi_m$ : | MAGNET'S MAGNETIC FLUX [wb] |
| $v_q$ : | q-AXIS VOLTAGE [V] | $P$ : | NUMBER OF MOTOR POLES |
| $N_r$ : | MOTOR ROTATION SPEED [rpm] | | |
| $\omega_r$ : | MECHANICAL ANGULAR VELOCITY [rad/s] | | |

Here,

· $i_d$ and $i_q$ represent the d-axis current and the q-axis current,
· $v_d$ and $v_q$ represent the d-axis voltage and the q-axis voltage,
· $N_r$ represents a motor rotation speed and is converted into a mechanical angular velocity $\omega_r$ according to the mathematical expression (1),
· R represents a motor one-phase resistance value,
· L represents a motor one-phase inductance value,
· $\Phi_m$ represents a magnet's magnetic flux and is derived from the mathematical expression (6),
· P represents the number of motor poles, and

the motor one-phase inductance (L) is estimated by substituting the mechanical angular velocity ($\omega_r$), the q-axis current ($i_q$), the d-axis current ($i_d$), the q-axis voltage ($v_q$), the d-axis voltage ($v_d$), and the magnet's magnetic flux ($\Phi_m$) at the time of measurement into the mathematical expression (5). In this case, winding inductance estimation and gain adjustment in the control device can be performed without fail.

Advantageous Effects of Invention

According to the present invention in which a synchronous motor in a constant rotating state is set as the measurement target, and a control device performs winding inductance estimation online while calculating a three-phase current, a three-phase voltage, and a rotation speed of the synchronous motor as measurement parameters, the winding inductance of the synchronous motor can be accurately estimated, and gain adjustment in current feedback control can be automatically performed with high accuracy.

Brief Description of Drawings

FIG. 1 is a functional block diagram illustrating a processing situation during winding inductance estimation and automatic gain adjustment by a synchronous motor control device according to an embodiment of the present invention;

FIG. 2 is an explanatory diagram illustrating an outline of a method for estimating a winding inductance of a synchronous motor according to a conventional example;

FIG. 3 is a functional block diagram illustrating an outline of a control system in a conventional synchronous motor control device; and

FIG. 4 is a chart showing a process of deriving each mathematical expression in the present invention.

Description of Embodiments

In the description below, embodiments of the present invention will be explained with reference to the drawings. Note that, in the present invention, "online" refers to a state in which a synchronous motor connected to a control device is being driven.

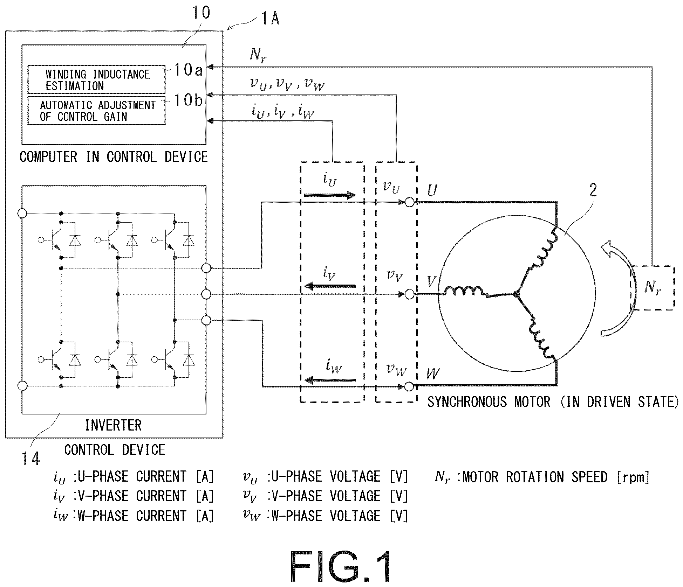

FIG. 1 is a functional block diagram illustrating the processing details at a time of winding inductance estimation and at a time of automatic gain adjustment, which are characteristic parts of the details of control to be performed on a synchronous motor 2 by a control device 1A of the present embodiment. The basic configuration and the basic functions of the control device 1A are the same as those of a conventional control device 1B illustrated in FIG. 3.

The basic configuration of the control device 1A according to the present embodiment is now described with reference to FIGS. 1 and 3. The control device 1A includes an inverter 14 including a plurality of switching elements, and a computer 10 including a storage means, a CPU, and the like. As the means functionally formed by the computer 10, the control device 1A includes; a current converting means 11 that converts a detected or estimated three-phase current of the synchronous motor 2 into a d-axis current and a q-axis current; a current feedback control calculating means 12 that calculates a d-axis voltage command value and a q-axis voltage command value from the d-axis current and the q-axis current, using current feedback control; and a voltage command value converting means 13 that converts the d-axis voltage command value and the q-axis voltage command value into a three-phase voltage command value. On the basis of the converted three-phase voltage command value, the control device 1A sends an output to the synchronous motor 2 while controlling switching on and off of the switching elements of the inverter 14. The above components are the same as those of the control device 1B according to the conventional example.

Further, the present embodiment is characterized in that the control device 1A performs gain adjustment in the above-mentioned current feedback control while estimating the winding inductance by calculating the three-phase current, the three-phase voltage, and the rotation speed of the synchronous motor as measurement parameters to obtain the winding inductance to be used in the current feedback control, the measurement target being the synchronous motor 2 in a constant rotating state.

That is, the winding inductance, which is a parameter necessary for the current feedback control on the synchronous motor 2, can be estimated online from the outer product of the current value and the voltage value at a time of constant rotation, and the control device 1A can automatically and accurately perform gain adjustment in the current feedback control.

The processing details are now described in detail with reference to FIG. 1. Although measurement of a winding inductance is performed for the synchronous motor 2 in a stationary state in conventional cases as illustrated in FIG. 2, the control device 1A of the present embodiment sets, as the measurement target, the synchronous motor 2 put in a constant rotating state under drive control of the inverter 14.

The measurement parameters do not include the winding inductance, but include a three-phase current ($i_U$, iv, iw), a three-phase voltage ($V_U$, $V_V$, $V_W$), and the rotation speed ($N_r$) of the synchronous motor. Note that the rotation speed ($N_r$) of the synchronous motor is converted into a mechanical angular velocity ($\omega_r$) according to the mathematical expression (1) shown below.

[Math. 3]

$$\omega_r = \frac{2\pi}{60} N_r \qquad \cdots (1)$$

By calculating these measurement parameters with the computer 10 in the control device 1A, the winding inductance estimation and the gain adjustment in the current feedback control can be automatically performed. That is, as illustrated in FIG. 1, a winding inductance estimating means 10a functionally formed by the computer 10 automatically estimates the winding inductance, and a control gain automatic adjusting means 10b formed in the same manner automatically adjusts the gain.

Next, the principles of a method for measuring the above-mentioned winding inductance is described, using a voltage equation and an outer product equation in the synchronous motor 2.

The voltage equation and the outer product on the d-axis and the q-axis of the synchronous motor 2 are expressed by the mathematical expressions (2) and (3) shown below. Here, an equation is shown using a motor one-phase resistance (R), a motor one-phase inductance (L), the mechanical angular velocity ($\omega_r$), and a magnet's magnetic flux ($\Phi_m$).

[Math. 4]

$$\begin{bmatrix} v_d \\ v_q \end{bmatrix} = \begin{bmatrix} R & -L\frac{P}{2}\omega_r \\ L\frac{P}{2}\omega_r & R \end{bmatrix} \begin{bmatrix} i_d \\ i_q \end{bmatrix} + L\frac{d}{dt}\begin{bmatrix} i_d \\ i_q \end{bmatrix} + \begin{bmatrix} 0 \\ 1 \end{bmatrix}\frac{P}{2}\Phi_m\omega_r \quad \cdots (2)$$

$$v_d i_q - v_q i_d \quad \cdots (3)$$

The motor one-phase inductance (L) is derived according to the following mathematical expression (4) formed by substituting the mathematical expression (2), which is a voltage equation of VdVq, into the mathematical expression (3), which is an outer product equation.

[Math. 5]

$$v_d i_q - v_q i_d = \frac{1}{2}L\omega_r i_d^2 + \frac{1}{2}L\omega_r i_q^2 + \frac{1}{2}\Phi_m\omega_r i_d \quad \cdots (4)$$

The motor one-phase inductance (L) is then deformed so as to shift to the left side, so that the mathematical expression (5) shown below is obtained.

[Math. 6]

$$L = \frac{1}{i_q^2 + i_d^2}\left\{ \frac{2}{\omega_r}(v_d i_q - v_q i_d) - \Phi_m i_d \right\} \quad \cdots (5)$$

The motor one-phase inductance (L) can be estimated by substituting the mechanical angular velocity ($\omega_r$), the q-axis current ($i_q$), the d-axis current ($i_d$), the q-axis voltage ($v_q$), the d-axis voltage ($v_d$), and the magnet's magnetic flux ($\Phi_m$) at the time of measurement into the mathematical expression (5).

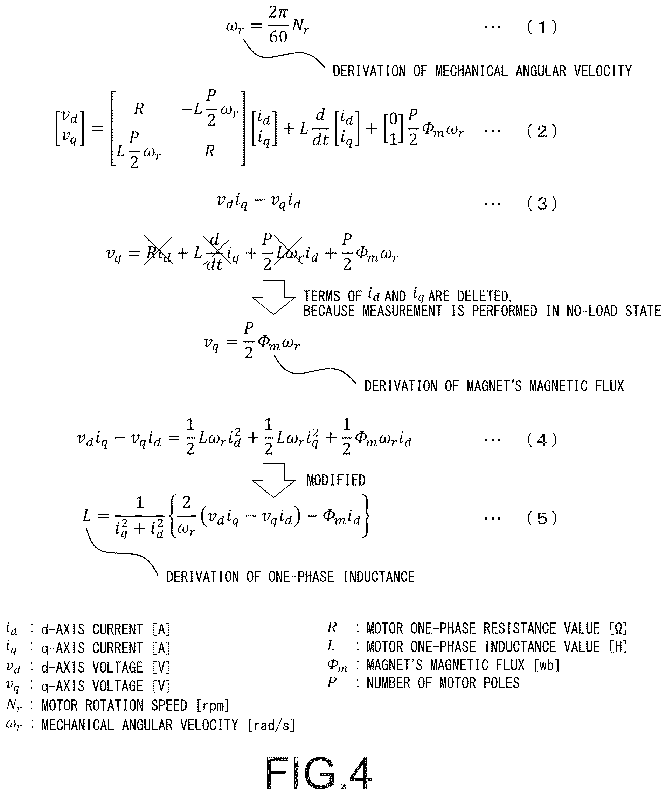

FIG. 4 illustrates a process of deriving the above mathematical expressions (1) to (5).

Note that the q-axis current ($i_q$) and the d-axis current ($i_d$) are obtained by converting the three-phase current ($i_U$, $i_V$, $i_W$) into an orthogonal coordinate expression, and the q-axis voltage ($v_q$) and the d-axis voltage ($v_d$) are obtained by converting the three-phase voltage ($V_U$, $V_V$, $V_W$) into an orthogonal coordinate expression. The magnet's magnetic flux ($\Phi_m$) can be estimated from the mechanical angular velocity ($\omega_r$) and the q-axis voltage ($v_q$) at a time of no-load driving of the synchronous motor 2, according to the mathematical expression (6) shown below.

[Math. 7]

$$v_q = \frac{P}{2}\Phi_m\omega_r \quad \cdots (6)$$

In this manner, the winding inductance estimation that takes into account the frequency and the current characteristics at a time of driving the synchronous motor 2 can be performed online, which greatly contributes to improvement of controllability in the current feedback control. Also, optimum control gain adjustment can be performed without being affected by any change in the specification of the synchronous motor 2.

As described so far, the synchronous motor control device according to the present invention is capable of accurately estimating the winding inductance of a synchronous motor, and thus, the gain adjustment in the current feedback control can be automatically performed with high accuracy.

Reference Signs List

1A Control device
2 Synchronous motor
10 Computer
10a Winding inductance estimating means
10b Control gain automatic adjusting means
11 Current converting means
12 Current feedback control calculating means
13 Voltage command value converting means
14 Inverter

**Claims**

1. A synchronous motor control device (1A) that includes: an inverter (14) including a plurality of switching elements; a current converting means (11) configured to convert a detected or estimated three-phase current of a synchronous motor (2) into a d-axis current and a q-axis current; a current feedback control calculating means (12) configured to calculate a d-axis voltage command value and a q-axis voltage command value from the d-axis current and the q-axis current, using current feedback control; and a voltage command value converting means (13) configured to convert the d-axis voltage command value and the q-axis voltage command value into a three-phase voltage command value, and sends an output to the synchronous motor (2) while controlling switching on and off of the switching elements on a basis of the three-phase voltage command value, **characterized in that**
   gain adjustment in the current feedback control is automatically performed while a winding inductance to be used in the current feedback control is estimated through calculation of a three-phase current, a three-phase voltage, and a rotation speed of the synchronous motor (2) as measurement parameters, the synchronous motor (2) in a constant rotating state being set as a measurement target.

2. The synchronous motor control device (1A) according to claim 1, **characterized in that**

   the three-phase current is converted into the d-axis current and the q-axis current in an orthogonal coordinate expression,
   the three-phase voltage is converted into a d-axis voltage and a q-axis voltage in an orthogonal coordinate expression, and
   the rotation speed of the synchronous motor (2) is converted into a mechanical angular velocity, each of which being used in the calculation.

3. The synchronous motor control device (1A) according to claim 2, **characterized in that**

   the winding inductance is expressed by a mathematical expression (5) obtained by modifying a mathematical expression (4) obtained by substituting a mathematical expression (2) into a mathematical expression (3), using the following mathematical expressions (1) to (6),

[Math. 1]

$$\omega_r = \frac{2\pi}{60} N_r \qquad \cdots (1)$$

$$\begin{bmatrix} v_d \\ v_q \end{bmatrix} = \begin{bmatrix} R & -L\frac{P}{2}\omega_r \\ L\frac{P}{2}\omega_r & R \end{bmatrix} \begin{bmatrix} i_d \\ i_q \end{bmatrix} + L\frac{d}{dt}\begin{bmatrix} i_d \\ i_q \end{bmatrix} + \begin{bmatrix} 0 \\ 1 \end{bmatrix}\frac{P}{2}\Phi_m\omega_r \qquad \cdots (2)$$

$$v_d i_q - v_q i_d \qquad \cdots (3)$$

$$v_d i_q - v_q i_d = \frac{1}{2}L\omega_r i_d^2 + \frac{1}{2}L\omega_r i_q^2 + \frac{1}{2}\Phi_m\omega_r i_d \qquad \cdots (4)$$

$$L = \frac{1}{i_q^2 + i_d^2}\left\{ \frac{2}{\omega_r}(v_d i_q - v_q i_d) - \Phi_m i_d \right\} \qquad \cdots (5)$$

$$v_q = \frac{P}{2}\Phi_m\omega_r \qquad \cdots (6)$$

| | | | |
|---|---|---|---|
| $i_d$ : | d-AXIS CURRENT [A] | $R$ : | MOTOR ONE-PHASE RESISTANCE VALUE [Ω] |
| $i_q$ : | q-AXIS CURRENT [A] | $L$ : | MOTOR ONE-PHASE INDUCTANCE VALUE [H] |
| $v_d$ : | d-AXIS VOLTAGE [V] | $\Phi_m$ : | MAGNET'S MAGNETIC FLUX [wb] |
| $v_q$ : | q-AXIS VOLTAGE [V] | $P$ : | NUMBER OF MOTOR POLES |
| $N_r$ : | MOTOR ROTATION SPEED [rpm] | | |
| $\omega_r$ : | MECHANICAL ANGULAR VELOCITY [rad/s] | | |

where

· $i_d$ and $i_q$ represent the d-axis current and the q-axis current,
· $v_d$ and $v_q$ represent the d-axis voltage and the q-axis voltage,
· $N_r$ represents a motor rotation speed and is converted into a mechanical angular velocity $\omega_r$ according to the mathematical expression (1),
· R represents a motor one-phase resistance value,
· L represents a motor one-phase inductance value,
· $\Phi_m$ represents a magnet's magnetic flux and is derived according to the mathematical expression (6),
· P represents the number of motor poles, and

the motor one-phase inductance (L) is estimated by substituting the mechanical angular velocity ($\omega_r$), the q-axis current ($i_q$), the d-axis current ($i_d$), the q-axis voltage ($v_q$), the d-axis voltage ($v_d$), and the magnet's magnetic flux ($\Phi_m$) at the time of measurement into the mathematical expression (5).

10 1A

WINDING INDUCTANCE ESTIMATION — 10a

AUTOMATIC ADJUSTMENT OF CONTROL GAIN — 10b

COMPUTER IN CONTROL DEVICE

$N_r$

$v_U, v_V, v_W$

$i_U, i_V, i_W$

$i_U$

$i_V$

$i_W$

$v_U$   U

$v_V$   V

$v_W$   W

2

$N_r$

SYNCHRONOUS MOTOR (IN DRIVEN STATE)

INVERTER

14   CONTROL DEVICE

$i_U$ :U-PHASE CURRENT [A]     $v_U$ :U-PHASE VOLTAGE [V]     $N_r$ :MOTOR ROTATION SPEED [rpm]
$i_V$ :V-PHASE CURRENT [A]     $v_V$ :V-PHASE VOLTAGE [V]
$i_W$ :W-PHASE CURRENT [A]     $v_W$ :W-PHASE VOLTAGE [V]

# FIG.1

LCR METER OR LIKE

$L_{w-u}$   $L_{u-v}$

U

V

$L_{v-w}$

W

- MEASUREMENT OF U-V, V-W, AND W-U INTERPHASE INDUCTION VALUES IS PERFORMED
- AVERAGE OF EACH MEASUREMENT VALUE IS CALCULATED, AND IS HALVED

SYNCHRONOUS MOTOR (IN RESTING STATE)

$L_{u-v}$ : U-V INTERPHASE INDUCTANCE [H]
$L_{v-w}$ : V-W INTERPHASE INDUCTANCE [H]
$L_{w-u}$ : W-U INTERPHASE INDUCTANCE [H]

# FIG.2

1B, 1A

$i_{dref}$
$i_{qref}$

11        12        13        2

$i_U$
$i_V$
$i_W$
MOTOR POSITION

| U-, V-, AND W-PHASES ↓ d- AND q-AXES CONVERSION | $i_d$ $i_q$ | CURRENT FEEDBACK CONTROL CALCULATION (OUTPUT VOLTAGE COMMAND CALCULATION) | $v_{dref}$ $v_{qref}$ | d- AND q-AXES ↓ U-, V-, AND W-PHASES CONVERSION | $v_{Uref}$ $v_{Vref}$ $v_{Wref}$ |

PROPORTIONAL FEEDBACK GAIN : $K_A$
ONE-PHASE INDUCTANCE : L

OUTPUT TO MOTOR

$i_U$ : U-PHASE CURRENT [A]       $v_{dref}$ : d-AXIS VOLTAGE COMMAND [V]
$i_V$ : V-PHASE CURRENT [A]       $v_{qref}$ : q-AXIS VOLTAGE COMMAND [V]
$i_W$ : W-PHASE CURRENT [A]       $v_{Uref}$ : U-PHASE VOLTAGE COMMAND [V]
$i_{dref}$ : d-AXIS CURRENT COMMAND [A]   $v_{Vref}$ : V-PHASE VOLTAGE COMMAND [V]
$i_{qref}$ : q-AXIS CURRENT COMMAND [A]   $v_{Wref}$ : W-PHASE VOLTAGE COMMAND [V]
$i_d$ : d-AXIS CURRENT [A]
$i_q$ : q-AXIS CURRENT [A]

# FIG.3

$$\omega_r = \frac{2\pi}{60} N_r \qquad \cdots \quad (1)$$

DERIVATION OF MECHANICAL ANGULAR VELOCITY

$$\begin{bmatrix} v_d \\ v_q \end{bmatrix} = \begin{bmatrix} R & -L\frac{P}{2}\omega_r \\ L\frac{P}{2}\omega_r & R \end{bmatrix} \begin{bmatrix} i_d \\ i_q \end{bmatrix} + L\frac{d}{dt}\begin{bmatrix} i_d \\ i_q \end{bmatrix} + \begin{bmatrix} 0 \\ 1 \end{bmatrix}\frac{P}{2}\Phi_m\omega_r \quad \cdots \quad (2)$$

$$v_d i_q - v_q i_d \qquad \cdots \quad (3)$$

$$v_q = \cancel{Ri_d} + L\cancel{\frac{d}{dt}i_q} + \frac{P}{2}\cancel{L\omega_r i_d} + \frac{P}{2}\Phi_m\omega_r$$

TERMS OF $i_d$ AND $i_q$ ARE DELETED,
BECAUSE MEASUREMENT IS PERFORMED IN NO-LOAD STATE

$$v_q = \frac{P}{2}\Phi_m\omega_r$$

DERIVATION OF MAGNET'S MAGNETIC FLUX

$$v_d i_q - v_q i_d = \frac{1}{2}L\omega_r i_d^2 + \frac{1}{2}L\omega_r i_q^2 + \frac{1}{2}\Phi_m\omega_r i_d \qquad \cdots \quad (4)$$

MODIFIED

$$L = \frac{1}{i_q^2 + i_d^2}\left\{\frac{2}{\omega_r}\left(v_d i_q - v_q i_d\right) - \Phi_m i_d\right\} \qquad \cdots \quad (5)$$

DERIVATION OF ONE-PHASE INDUCTANCE

$i_d$ : d-AXIS CURRENT [A]
$i_q$ : q-AXIS CURRENT [A]
$v_d$ : d-AXIS VOLTAGE [V]
$v_q$ : q-AXIS VOLTAGE [V]
$N_r$ : MOTOR ROTATION SPEED [rpm]
$\omega_r$ : MECHANICAL ANGULAR VELOCITY [rad/s]

$R$ : MOTOR ONE-PHASE RESISTANCE VALUE [Ω]
$L$ : MOTOR ONE-PHASE INDUCTANCE VALUE [H]
$\Phi_m$ : MAGNET'S MAGNETIC FLUX [wb]
$P$ : NUMBER OF MOTOR POLES

# FIG.4

Europäisches
Patentamt

European
Patent Office

Office européen
des brevets

# EUROPEAN SEARCH REPORT

Application Number

EP 24 20 3839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y.A.-R.I. MOHAMED ET AL: "Adaptive Self-Tuning MTPA Vector Controller for IPMSM Drive System", IEEE TRANSACTIONS ON ENERGY CONVERSION., vol. 21, no. 3, 1 September 2006 (2006-09-01), pages 636-644, XP055276407, US ISSN: 0885-8969, DOI: 10.1109/TEC.2006.878243 | 1 | INV. H02P21/16 |
| Y | * the whole document * | 2 | |
| A | | 3 | |
| | ----- | | |
| Y | JP 2021 166427 A (HITACHI INDUSTRY EQUIPMENT SYSTEMS CO LTD) 14 October 2021 (2021-10-14) * paragraph [0065] * | 2 | |
| | ----- | | |
| X | EP 2 582 036 B1 (LSIS CO LTD [KR]) 23 January 2019 (2019-01-23) | 1 | |
| A | * paragraphs [0005], [0034], [0020] * | 2,3 | TECHNICAL FIELDS SEARCHED (IPC) |
| | ----- | | |
| A | EP 1 753 125 A2 (HITACHI LTD [JP]) 14 February 2007 (2007-02-14) * claim 1 * | 1-3 | H02P |
| | ----- | | |

The present search report has been drawn up for all claims

| Place of search | Date of completion of the search | Examiner |
|---|---|---|
| Munich | 12 February 2025 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3839

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| JP 2021166427 | A | 14-10-2021 | JP | 7368302 B2 | 24-10-2023 |
| | | | JP | 2021166427 A | 14-10-2021 |
| | | | WO | 2021205690 A1 | 14-10-2021 |
| EP 2582036 | B1 | 23-01-2019 | CN | 103051277 A | 17-04-2013 |
| | | | EP | 2582036 A2 | 17-04-2013 |
| | | | ES | 2717601 T3 | 24-06-2019 |
| | | | JP | 5580384 B2 | 27-08-2014 |
| | | | JP | 2013085461 A | 09-05-2013 |
| | | | KR | 20130039613 A | 22-04-2013 |
| | | | US | 2013093370 A1 | 18-04-2013 |
| EP 1753125 | A2 | 14-02-2007 | CN | 1913340 A | 14-02-2007 |
| | | | EP | 1753125 A2 | 14-02-2007 |
| | | | JP | 4677852 B2 | 27-04-2011 |
| | | | JP | 2007049843 A | 22-02-2007 |
| | | | US | 2007035269 A1 | 15-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009144957 A
- WO 2011024935 A